## Europäisches Patentamt

## European Patent Office

## Office européen des brevets

(11) Veröffentlichungsnummer: **0 130 175**
**B1**

(12) # EUROPÄISCHE PATENTSCHRIFT

(45) Veröffentlichungstag der Patentschrift:
04.01.89

(51) Int. Cl.⁴: **F 16 C 33/24,** F 16 C 33/12

(21) Anmeldenummer: **84890109.6**

(22) Anmeldetag: **06.06.84**

(54) **Verfahren zum Herstellen eines Gleitlagers.**

(30) Priorität: **23.06.83 AT 2301/83**

(43) Veröffentlichungstag der Anmeldung:
**02.01.85 Patentblatt 85/1**

(45) Bekanntmachung des Hinweises auf die Patenterteilung:
**04.01.89 Patentblatt 89/1**

(84) Benannte Vertragsstaaten:
**CH DE FR GB IT LI SE**

(56) Entgegenhaltungen:
**EP-A-0 057 808**
**DE-A-2 209 148**
**DE-A-2 382 026**
**DE-A-2 813 707**
**DE-C-688 246**

(73) Patentinhaber: **MIBA Gleitlager Aktiengesellschaft, Hauptstrasse 3, A-4663 Laakirchen (AT)**

(72) Erfinder: **Ehrentraut, Otto, Sudetenplatz 1, A-4810 Gmunden (AT)**
Erfinder: **Ederer, Ulf Gerhard, Dipl.- Ing., Dürerstrasse 16, A-4663 Laakirchen (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

**Beschreibung**

Die Erfindung bezieht sich auf ein Verfahren zum Herstellen eines Gleitlagers mit einer tragenden Stützschale, auf die eine Lagermetallschicht mit über die Laufflächenbreite verteilten, sich zumindest im wesentlichen in Laufrichtung erstreckenden Laufflächenzonen aufgebracht wird, zwischen denen Laufflächenzonen mit einer gegenüber der Lagermetallschicht geringeren Härte vorgesehen sind.

Bei bekannten Gleitlagern dieser Art (EP-A-57 808) ist in nutenartigen Ausnehmungen der Lagermetallschicht auf Aluminium- oder Kupferbasis ein weicherer Lagerwerkstoff, beispielsweise eine Weißmetallegierung oder ein Kunststoff, eingebettet, wobei sich aufgrund der feinen Verteilung von härterem und weicherem Werkstoff über die Lauffläche und der Ausrichtung der nutenartigen Ausnehmungen in Laufrichtung ein Gleitlager ergibt, das die Vorteile der härteren und weicheren Lagerwerkstoffe in sich vereinigt, ohne deren Nachteile aufzuweisen. Zwischen der härteren Lagermetallschicht und dem in diese Lagermetallschicht eingebetteten weicheren Lagerwerkstoff wird allerdings im allgemeinen eine Haftvermittlungsschicht, beispielsweise aus Nickel, notwendig, die bis in den Bereich der Lauffläche reicht und mit ihren schlechten Gleiteigenschaften unter Umständen Anlaß zu Störungen und zu einem erhöhten Zapfenverschleiß geben kann.

Zum Härten von Lagerschalen aus Eisenlegierungen ist es bekannt (DE-C-688 246), die Lauffläche mit Hilfe eines Schweißbrenners streifenweise zu erhitzen und unmittelbar danach abzuschrecken, so daß zwischen diesen gehärteten Streifen der weichere Grundwerkstoff der Lagerschale erhalten bleibt. Mit solchen Lagern können jedoch die Gleiteigenschaften nicht verbessert werden, weil einerseits die Lagermetallschicht zusätzlich bereichsweise gehärtet wird und andererseits die sonst zum Einsatz kommenden, weicheren Lagermetalle durch eine von vornherein härtere Eisenlegierung ersetzt sind.

Zur Oberflächenhärtung von Werkstücken aus Aluminium oder Aluminiumlegierungen ist es schließlich bekannt (DE-A-2 362 026), ein Übergangsmetall in die Oberfläche einzuschmelzen, um über die sich bei einer hohen Erstarrungsgeschwindigkeit bildenden intermetallischen Phasen eine entsprechende Härtesteigerung zu erreichen. Wird dieses Übergangsmetall in einem vorgegebenen Raster in den Grundwerkstoff eingeschmolzen und danach das nicht eingeschmolzene Übergangsmetall von der Oberfläche des Grundwerkstoffes abgetragen, so werden abwechselnd Bereiche des weicheren Aluminiumwerkstoffes und der härteren Einschmelzungen erhalten. Da als Übergangsmetall jedoch Metalle eingesetzt werden, die sich nicht als Lagerwerkstoffe eignen - bei Gleitlagern dürfen lediglich die Lagerschalen, nicht aber die zu lagernde Welle einen Verschleißteil bilden -, kann eine solche Oberflächenbehandlung nicht für Gleitlager eingesetzt werden, die eine besonders gute Gleitfähigkeit aufweisen sollen. Außerdem kann durch das bereichsweise Härten von Oberflächenbereichen eines Werkstückes keine Anregung für das Vermeiden von gegenüber dem Grundwerkstoff härteren Schichten bei Gleitlagern erhalten werden.

Der Erfindung liegt somit die Aufgabe zugrunde, ein Gleitlager der eingangs geschilderten Art so zu verbessern, daß die durch die Bindeflächen zwischen den Lagerwerkstoffen unterschiedlicher Härte bedingten Schwierigkeiten mit Sicherheit vermieden werden.

Die Erfindung löst die gestellte Aufgabe dadurch, daß die Härte der Lagermetallschicht im Bereich der Laufflächenzonen geringerer Härte durch eine Wärmebehandlung bzw. ein Einschmelzen von Werkstoffen verringert wird.

Durch eine bereichsweise Wärmebehandlung oder ein bereichsweises Einschmelzen eines Legierungswerkstoffes kann die Härte der Lagermetallschicht entsprechend verringert werden, ohne einen Lagerwerkstoff mit einer gegenüber der Lagermetallschicht geringeren Härte in Nuten dieser Lagermetallschicht einsetzen zu müssen, so daß die durch die Form und die Verteilung der Laufflächenzonen unterschiedlicher Härte bestimmten Eigenschaften hinsichtlich der Gleitfähigkeit, der Belastbarkeit und der Verschleißfestigkeit unberührt bleiben. Aufgrund des durch das Herstellungsverfahren ermöglichten verlaufenden Überganges zwischen den behandelten und den unbehandelten Zonen der Lagermetallschicht können jedoch die sonst auftretenden Grenzschichtprobleme vermieden werden, was eine erhebliche Verbesserung dieser Gleitlager darstellt.

Die Verringerung der Härte der Lagermetallschicht kann durch ein Umschmelzen von entsprechenden Zonen dieser Lagermetallschicht erreicht werden, wobei dieser Umschmelzvorgang mit Hilfe von Laser- oder Elektronenstrahlen einfach durchgeführt werden kann.

Zur Herstellung eines Gleitlagers durch ein zonenweises Einschmelzen eines Werkstoffes in die Lagermetallschicht kann vorteilhaft so vorgegangen werden, daß der zonenweise in die Lagermetallschicht einzuschmelzende Werkstoff zunächst über die gesamte Lauffläche aufgetragen und dann zonenweise, z. B. mit Hilfe eines Laser- oder Elektronenstrahles, in die Lagermetallschicht eingeschmolzen wird, bevor die aufgetragene Werkstoff schicht wieder abgetragen wird. Durch das nachträgliche Abtragen des zunächst aufgetragenen Legierungswerkstoffes werden die unbehandelten Zonen der Lagermetallschicht wieder freigelegt und gleichzeitig eine glatte Lauffläche erzielt, wobei beim Auftragen des Legierungswerkstoffes die zonenweise Verteilung unberücksichtigt bleiben kann.

An Hand der Zeichnung wird das erfindungsgemäße Verfahren zum Herstellen eines Gleitlagers näher erläutert.

Es zeigen:

Fig. 1 ein Gleitlager mit sich in Laufrichtung er streckenden Laufflächenzonen unterschiedlicher Härte in einer Draufsicht auf die Lauffläche und die

Fig. 2 bis 4 ein solches Gleitlager in unterschiedlichen Stufen des Herstellungsverfahrens in einem Schnitt durch die Lagermetallschicht.

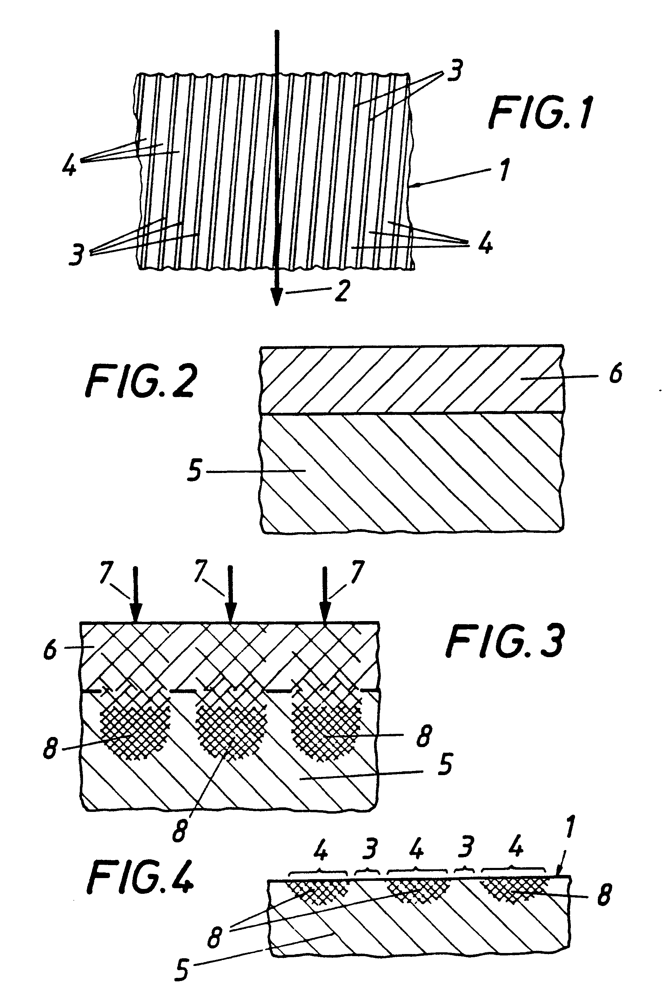

Wie der Fig. 1 entnommen werden kann, weist die Lauffläche 1 des dargestellten Gleitlagers sich im wesentlichen in Laufrichtung 2 erstreckende Laufflächenzonen 3 und 4 auf, die unterschiedliche Härte besitzen und einander abwechsein. Diese Ausbildung hat den Vorteil, daß wegen der feinen Verteilung auch in einem örtlichen Belastungsbereich die einzelnen Lagerwerkstoffe nicht für sich, sondern in einer Kombination wirksam werden, die die Nachteile des jeweiligen Einzelwerkstoffes vermeidet. Der Lagerverschleiß wird daher im wesentlichen von den Eigenschaften der härteren Laufflächenzonen und die Gleiteigenschaft von den Laufflächenzonen geringerer Härte bestimmt, wobei zufolge der Ausrichtung der Laufflächenzonen 3 und 4 Fremdkörper nicht aus den weicheren Zonen in die härteren Zonen eingedrückt und dort störend abgelagert werden können. Die bekannte Einbettung des weicheren Lagerwerkstoffes in Nuten des härteren Lagerwerkstoffes macht allerdings Zwischenschichten zwischen diesen Werkstoffen notwendig, was nicht nur den Herstellungsaufwand vergrößert, sondern auch den Nachteil mit sich bringt, daß diese Zwischenschichten bis zur Lauffläche 1 reichen und sich störend bemerkbar machen können, da sie schlechte Gleiteigenschaften aufweisen.

Um diese Zwischenschichten zu vermeiden, werden die Zonen mit einer gegenüber der Lagermetallschicht geringeren Härte durch eine zonenweise Wärmebehandlung der Lagermetallschicht hergestellt, indem die Lagermetallschicht im Bereich der Lauffläche 1 zonenweise der Wirkung eines Laser- oder Elektronenstrahles ausgesetzt wird, wodurch die Härte der behandelten Laufflächenzonen 4 gegenüber den unbehandelten Laufflächenzonen 3 verringert wird.

Gemäß den Fig. 2 bis 4 werden die Laufflächenzonen 3 und 4 durch ein zonenweises Einschmelzen eines Legierungswerkstoffes hergestellt. Zu diesem Zweck wird auf der auf einer nicht dargestellten stählernen Stützschale aufgebrachten Lagermetallschicht 5, beispielsweise aus einer Aluminium-Zinnlegierung, ein Legierungswerkstoff 6, z. B.

Blei, in einer geeigneten Schicht aufgetragen, wie dies in Fig. 2 dargestellt ist. Danach wird die Lauffläche zonenweise einer Wärmebehandlung durch einen Laser- oder Elektronenstrahl 7 ausgesetzt (Fig. 3), so daß die Lagermetallschicht 5 in Bereich dieses Laser- oder Elektronenstrahles 7 angeschnolzen und ein Teil des Legierungswerkstoffes 6 eingeschmolzen wird. In der Lagermetallschicht 5 ergeben sich somit Zonen 8 aus einer Aluninum-Zinn-Bleilegierung, die nach dem Abtragen der aufgetragenen Schicht des Legierungswerkstoffes die Laufflächenzonen 4 mit einer gegenüber der Lagermetallschicht 5 geringeren Härte ergeben, wie dies in Fig. 4 angedeutet ist. Der verlaufende Übergang zwischen den unbehandelten Laufflächenzonen 3 und den behandelten Laufflächenzonen 4 ergibt nicht nur eine gute Einbettung der behandelten Laufflächenzonen 4 in der Lagermetallschicht 5, sondern vermeidet auch Grenzschichtprobleme zwischen den unterschiedlichen Zonen 3 und 4, wie sie beim galvanischen Abscheiden der Laufflächenzonen 4 auftreten würden. Durch die Wahl der Wärmebehandlung können im Zusammenhang mit den Ausgangswerkstoff der Lagermetallschicht und durch das Einschmelzen unterschiedlicher Legierungswerkstoffe Gleitlager hergestellt werden, die an sehr unterschiedliche Verhältnisse angepaßt sind, wobei jeweils die Vorteile der Verteilung von härteren und weicheren Laufflächenzonen 3 und 4 über die Laufflichenbreite gewahrt werden.

**Patentansprüche**

1. Verfahren zum Herstellen eines Gleitlagers mit einer tragenden Stützschale, auf die eine Lagermetallschicht (5) mit über die Laufflächenbreite verteilten, sich zumindest im wesentlichen in Laufrichtung (2) erstreckenden Laufflächenzonen (3) aufgebracht wird, zwischen denen Laufflächenzonen (4) mit einer gegenüber der Lagermetallschicht (5) geringeren Härte vorgesehen sind, dadurch gekennzeichnet, daß die Härte der Lagermetallschicht (5) im Bereich der Laufflächenzonen (4) geringerer Härte durch eine Wärmebehandlung bzw. ein Einschmelzen von Werkstoffen (6) verringert wird.

2. Verfahren nach Anspruch 1, dadurch gekennzeichnet, daß die Lagermetallschicht (5) im Bereich der Laufflächenzonen (4) geringerer Härte umgeschmolzen wird.

3. Verfahren nach Anspruch 1, dadurch gekennzeichnet, daß der zonenweise in die Lagermetallschicht (5) einzuschmelzende Werkstoff (6) zunächst über die gesamte Lauffläche (1) aufgetragen und dann zonenweise, z. B. mit Hilfe eines Laser- oder Elektronenstrahles (7), in die Lagermetallschicht (5) eingeschmolzen wird, bevor die aufgetragene Werkstoffschicht wieder abgetragen wird.

## Claims

1. A process of manufacturing a sliding surface bearing consisting of a backing shell and a bearing metal layer (5) which is aplied to the backing shell and defines bearing surface zones (3) which are spaced apart over the width of the bearing surface and extend generally in the running direction (2), and which are separated by bearing surface bones (4) which have a lower hardness than the bearing metal layer (5), characterized in that the hardness of the bearing metal layer (5) adjacent to the bearing surface zones (4) having a loper hardness is decreased by a heat treatment or in that materials (6) are fused in.

2. A process according to claim 1, characterized in that the bearing metal layer (5) is remelted adjacent to the bearing surface zones (4) having a lower hardness.

3. A process according to claim 1, characterized in that the material (6) to be fused into certain zones of the bearing metal layer (5) is initially applied throughout the bearing surface (1) and is subsequently fused into certain zones of the bearing metal layer (5), e.g., with the aid of a laser beam or electron beam (7), and the layer of material which has been applied is subsequently removed.

## Revendications

1. Procédé pour fabriquer un palier lisse avec une coquille porteuse d'appui sur laquelle est déposée une couche (5) de métal antifriction, avec des zones de surface de glissement qui sont réparties sur la largeur de la surface de glissement et s'étendent au moins essentiellement dans le sens (2) du glissement, et entre lesquel les sont prévues des zones (4) de surface de glissement avec une dureté moindre par rapport à celle de la couche (5) de métal antifriction,

caractérisé par le fait que la dureté de la couche (5) de métal antifriction, dans le périmètre des zones (4) de surface de 91 issement ayant une moindre dureté, est diminuée par un traitement à la chaleur et/ou par inclusion de matériaux (6) en fusion.

2. Procédé selon la revendication 1, caractérisé par le fait que la couche (5) de métal antifriction est refondue dans le périmètre des zones (4) de surface de glissement.

3. Procédé selon la revendication 1, caractérisé par le fait que le matériau (6) devant être inclus en fusion zone par zone dans la couche (5) de métal anti-friction est déposé en une première phase sur la totalité de la surface (1) de glissement, puis introduit en fusion, par exemple à l'aide d'un rayon laser ou d'électrons (7), zone par zone dans la couche (5) de métal anti-friction avant que la couche de matériau déposée soit de nouveau éliminée.

FIG.1

FIG.2

FIG.3

FIG.4